Europäisches Patentamt

European Patent Office

Office européen des brevets

(11) Numéro de publication : **0 319 505 B1**

(12) **FASCICULE DE BREVET EUROPEEN**

(19)

(45) Date de publication du fascicule du brevet :
18.03.92 Bulletin 92/12

(51) Int. Cl.⁵ : **C21B 5/00**

(21) Numéro de dépôt : **88870178.6**

(22) Date de dépôt : **01.12.88**

(30) Priorité : **03.12.87 BE 8701383**

(43) Date de publication de la demande :
**07.06.89 Bulletin 89/23**

(45) Mention de la délivrance du brevet :
**18.03.92 Bulletin 92/12**

(84) Etats contractants désignés :
**AT BE DE ES FR GB IT LU NL**

(56) Documents cités :
**WO-A-82/03091**
**BE-A- 883 667**
**FR-A- 1 404 306**
**FR-A- 2 452 520**
**FR-A- 2 530 666**

(54) **Procédé de réduction des minerais dans un four à cuve.**

(73) Titulaire : **CENTRE DE RECHERCHES METALLURGIQUES CENTRUM VOOR RESEARCH IN DE METALLURGIE Association sans but lucratif Vereniging zonder winstoogmerk Rue Montoyer, 47 B-1040 Bruxelles (BE)**

(72) Inventeur : **Ponghis, Nikolas 35, Murmure des Grands Arbres B-4121 Neuville-en-Condroz (BE)**

(74) Mandataire : **Lacasse, Lucien Emile et al CENTRE DE RECHERCHES METALLURGIQUES Abbaye du Val-Benoît 11, rue Ernest Solvay B-4000 Liège (BE)**

## Description

La présente invention concerne un procédé de réduction de minerais dans un four à cuve. La description qui va suivre vise plus particulièrement la conduite d'un haut fourneau de fabrication de fonte par réduction de minerais de fer, mais ce n'est là qu'une simple illustration des applications de l'invention.

On sait que, dans un haut fourneau, la charge se compose traditionnellement de couches alternées de minerai de fer et de coke chargés successivement par le gueulard. Un courant d'air chaud injecté par les tuyères à vent, situées un peu au-dessus de la base du haut fourneau, assure la combustion du coke.

Cette combustion du coke fournit, d'une part, le gaz réducteur requis pour assurer la réduction des oxydes de fer et, d'autre part, une quantité de chaleur suffisante pour couvrir les besoins thermiques des réactions chimiques et pour assurer la fusion du métal et de la gangue. Outre ce double rôle de source de chaleur et d'agent réducteur, le coke remplit encore une troisième fonction, d'ordre mécanique, qui est de constituer une grille de support assurant le mouvement à contre-courant des gaz et des matières fondues.

Depuis de nombreuses années déjà, on cherche à réduire la mise au mille de coke au haut fourneau, c'est-à-dire la quantité de coke nécessaire à la production d'une tonne de fonte.

Une telle diminution de la consommation de coke est généralement obtenue par l'injection de combustibles auxiliaires au niveau des tuyères à vent, combinée le plus souvent à une augmentation de la température et/ou à une suroxygénation du vent.

Dans les divers procédés, les combustibles auxiliaires sont en général des hydrocarbures liquides ou gazeux. Ils sont injectés en même temps que du vent chaud se trouvant à une température de 1100°C à 1300 °C et destiné à assurer leur combustion dans le four à cuve.

A l'heure actuelle, les hydrocarbures liquides ou gazeux ont perdu une bonne partie de leur intérêt économique au profit des combustibles solides tels que le charbon ou le lignite. Ainsi, dans certains hauts fourneaux, on injecte jusqu'à 140 kg de charbon par tonne de fonte, ce qui permet d'abaisser la mise au mille de coke jusqu'à environ 350 kg.

On a proposé récemment, en particulier dans les documents BE-A-08700853 et BE-A-08700928, d'injecter au niveau des tuyères principales du four à cuve, un combustible auxiliaire solide accompagné d'un comburant très riche en oxygène - voire de l'oxygène pur - qui se trouve à la température ambiante.

Cette technique présente cependant certains inconvénients, notamment une vitesse d'inflammation et de combustion relativement faible du combustible due notamment au fait que la température des matières injectées est inférieure à la température d'inflammation du système (combustible + oxygène). De plus, ces injections exercent un effet refroidissant dans le haut fourneau. Enfin, la flamme ainsi obtenue n'est pas toujours suffisamment stable.

La présente invention a pour objet de proposer un procédé permettant de remédier à ces inconvénients tout en maintenant l'injection des matières à la température ambiante et sans compromettre l'économie d'énergie qui en résulte.

Conformément à la présente invention, un procédé de réduction des minerais dans un four à cuve, dans lequel on injecte un combustible solide et un comburant très riche en oxygène au niveau des tuyères principales dudit four à cuve, ledit combustible solide et ledit comburant très riche en oxygène se trouvant sensiblement à la température ambiante, est caractérisé en ce que l'on provoque le déclenchement de la combustion d'au moins une partie dudit combustible solide avant son injection dans le four à cuve.

Selon une mise en oeuvre particulière de l'invention, on provoque le déclenchement de ladite combustion au moyen d'une flamme dite pilote à laquelle on expose ladite partie du combustible solide.

Egalement selon l'invention, ladite partie du combustible solide est avantageusement mélangée au préalable à du comburant très riche en oxygène; celui-ci est de préférence prélevé dans le comburant très riche en oxygène destiné à être injecté dans le four à cuve.

Selon une autre caractéristique du procédé de l'invention, on provoque le déclenchement de ladite combustion dans la conduite servant à l'injection, dans le four à cuve, dudit combustible solide, respectivement dudit mélange de combustible solide et de comburant très riche en oxygène.

A cet effet, on forme ladite flamme pilote dans la conduite d'injection du combustible solide, respectivement dudit mélange de combustible solide et de comburant très riche en oxygène.

Suivant l'invention, la flamme pilote est de préférence obtenue par combustion d'un combustible gazeux tel que du gaz de gueulard ou du gaz de four à coke, le comburant pouvant éventuellement être prélevé dans ledit comburant très riche en oxygène.

Conformément à une autre caractéristique du procédé de l'invention, au moins une partie dudit combustible solide peut être transportée par le combustible gazeux alimentant la flamme pilote.

Toujours suivant l'invention, on provoque le déclenchement de ladite combustion respectivement on maintient ladite flamme pilote en permanence pendant les périodes où l'on injecte, dans le four à cuve, ledit combustible solide et ledit comburant très riche en oxygène qui se trouvent sensiblement à la température ambiante.

Le procédé de l'invention s'applique avec autant d'intérêt à tous les types de combustibles solides, tels que le charbon, le coke ou le lignite. Il permet de ne pas perturber l'équilibre thermique du four à cuve, en évitant l'effet refroidissant que nécessiterait le chauffage du combustible solide et du comburant jusqu'à la température d'inflammation.

L'établissement et le maintien d'une flamme pilote préconisés par l'invention, entraînent une amélioration de la stabilité de la flamme dans le four à cuve ainsi qu'un accroissement de la vitesse d'inflammation et de combustion du combustible solide.

## Revendications

1. Procédé de réduction des minerais dans un four à cuve, dans lequel on injecte un combustible solide et un comburant très riche en oxygène au niveau des tuyères principales dudit four à cuve, ledit combustible solide et ledit comburant très riche en oxygène se trouvant sensiblement à la température ambiante, caractérisé en ce que l'on provoque le déclenchement de la combustion d'au moins une partie dudit combustible solide avant son injection dans le four à cuve.

2. Procédé suivant la revendication 1, caractérisé en ce que l'on provoque le déclenchement de ladite combustion au moyen d'une flamme pilote à laquelle on expose ladite partie du combustible solide.

3. Procédé suivant l'une ou l'autre des revendications 1 et 2, caractérisé en ce que ladite partie du combustible solide est au préalable mélangée à du comburant très riche en oxygène.

4. Procédé suivant la revendication 3, caractérisé en ce que ledit comburant très riche en oxygène est prélevé dans le comburant très riche en oxygène destiné à être injecté dans le four à cuve.

5. Procédé suivant l'une ou l'autre des revendications 1 à 4, caractérisé en ce que l'on provoque le déclenchement de ladite combustion dans la conduite utilisée pour l'injection, dans le four à cuve, dudit combustible solide, respectivement dudit mélange de combustible solide et de comburant très riche en oxygène.

6. Procédé suivant l'une ou l'autre des revendications 2 à 5, caractérisé en ce que ladite flamme pilote est formée par la combustion d'un combustible gazeux.

7. Procédé suivant la revendication 6, caractérisé en ce que ledit combustible gazeux est le gaz de gueulard de haut fourneau.

8. Procédé suivant la revendication 6, caractérisé en ce que ledit combustible gazeux est le gaz de four à coke.

9. Procédé suivant l'une ou l'autre des revendications 6 à 8, caractérisé en ce qu'au moins une partie dudit combustible solide est transportée par ledit combustible gazeux.

10. Procédé suivant l'une ou l'autre des revendications 1 à 9, caractérisé en ce que l'on provoque le déclenchement de ladite combustion, respectivement on maintient ladite flamme pilote, en permanence pendant les périodes où l'on injecte dans le four à cuve ledit combustible solide et ledit comburant très riche en oxygène qui se trouvent sensiblement à la température ambiante.

## Patentansprüche

1. Verfahren zur Erzreduktion im Schachtofen, in dem man einen festen Brennstoff sowie ein hochsauerstoffhaltiges Verbrennungsgas an der Stelle der Hauptdüsen des Schachtofens einspritzt, wobei jener feste Brennstoff und jenes hochsauerstoffhaltige Verbrennungsgas im wesentlichen Umgebungstemperatur aufweisen, dadurch gekennzeichnet, daß man die Verbrennung mindestens eines Teils jenes festen Brennstoffs vor seiner Einspritzung in den Schachtofen in Gang bringt.

2. Verfahren nach Anspruch 1, dadurch gekennzeichnet, daß man jene Verbrennung mittels einer Dauerflamme in Gang bringt, die man auf jenen Teil des festen Brennstoffs einwirken läßt.

3. Verfahren nach einem der Ansprüche 1 und 2, dadurch gekennzeichnet, daß man jenen Teil des festen Brennstoffs vorher mit hochsauerstoffhaltigem Verbrennungsgas mischt.

4. Verfahren nach Anspruch 3, dadurch gekennzeichnet, daß man jenes hochsauerstoffhaltige Verbrennungsgas dem zur Einspritzung in den Schachtofen bestimmten hochsauerstoffhaltigen Verbrennungsgas entnimmt.

5. Verfahren nach einem der Ansprüche 1 bis 4, dadurch gekennzeichnet, daß man jene Verbrennung in der zur Einspritzung jenes festen Brennstoffs, bzw. jener Mischung aus festem Brennstoff und hochsauerstoffhaltigem Verbrennungsgas in den Schachtofen verwendeten Zuführleitung in Gang bringt.

6. Verfahren nach einem der Ansprüche 2 bis 5, dadurch gekennzeichnet, daß man jene Dauerflamme durch Verbrennung eines gasförmigen Brennstoffs bildet.

7. Verfahren nach Anspruch 6, dadurch gekennzeichnet, daß es sich bei jenem gasförmigen Brennstoff um Hochofengas handelt.

8. Verfahren nach Anspruch 6, dadurch gekennzeichnet, daß es sich bei jenem gasförmigen Brennstoff um Koksofengas handelt.

9. Verfahren nach einem der Ansprüche 6 bis 8, dadurch gekennzeichnet, daß mindestens ein Teil jenes festen Brennstoffs von jenem gasförmigen Brennstoff transportiert wird.

10. Verfahren nach einem der Ansprüche 1 bis 9, dadurch gekennzeichnet, daß man jene Verbrennung dauernd während der Einspritzdauer jenes festen Brennstoffs und jenes hochsauerstoffhaltigen Verbrennungsgases in den Schachtofen, die im wesentlichen Umgebungstemperatur aufweisen, in Gang bringt bzw. jene Dauerflamme aufrecht erhält.

## Claims

1. Method of ore reduction in a shaft furnace, into which a solid fuel and a combustion gas which is very rich in oxygen are injected at the level of the main nozzles of said shaft furnace, said solid fuel and said combustion gas which is very rich in oxygen essentially being at ambient temperature, characterised in that the combustion of at least a portion of said solid fuel is initiated before it is injected into the shaft furnace.

2. Method according to Claim 1, characterised in that said combustion is initiated by means of a pilot flame to which said portion of the solid fuel is exposed.

3. Method according to either one of Claims 1 or 2, characterised in that said portion of the solid fuel is mixed beforehand with the combustion gas which is very rich in oxygen.

4. Method according to Claim 3, characterised in that said combustion gas which is very rich in oxygen is taken from the combustion gas which is very rich in oxygen and is intended to be injected into the shaft furnace.

5. Method according to one of Claims 1 to 4, characterised in that said combustion is initiated in the feedline used for injecting said solid fuel or said mixture of solid fuel and combustion gas which is very rich in oxygen, respectively, into the shaft furnace.

6. Method according to one of Claims 2 to 5, characterised in that said pilot flame is formed by combustion of a gaseous fuel.

7. Method according to Claim 6, characterised in that said gaseous fuel is the gas from the top of a blast furnace.

8. Method according to Claim 6, characterised in that said gaseous fuel is the gas from a coke oven.

9. Method according to one of Claims 6 to 8, characterised in that at least a portion of said solid fuel is transported by said gaseous fuel.

10. Method according to one of Claims 1 to 9, characterised in that said combustion is initiated or said pilot flame is maintained, permanently during the periods at which said solid fuel and said combustion gas which is very rich in oxygen, both of which are essentially at ambient temperature, are injected into the shaft furnace.